# EUROPÄISCHE PATENTSCHRIFT

(11) **EP 2 005 231 B1**
(45) Veröffentlichungstag und Bekanntmachung des Hinweises auf die Patenterteilung: **26.07.2017**
(21) Anmeldenummer: 07722896.3
(22) Anmeldetag: 22.02.2007
(51) Int. Cl.: G02B 6/44, H02G 15/007, H01R 13/58

(54) **VORRICHTUNG ZUR ABFANGUNG VON LICHTWELLENLEITERKABELN**
DEVICE FOR HOLDING FIBRE OPTIC CABLES
DISPOSITIF DE SERRAGE DE CÂBLES OPTIQUES

(30) Priorität: 11.04.2006 DE 202006006018 U
(43) Veröffentlichungstag der Anmeldung: 24.12.2008
(73) Patentinhaber: CCS Technology, Inc., Wilmington, DE 19803 (US)
(72) Erfinder: KNORR, Jens, 58791 Werdohl (DE); MÜLLER, Thorsten, 58708 Menden (DE); SYPLACZ, Roman, 58099 Hagen (DE); KLUWE, Wolf, 58119 Hagen (DE)
(74) Vertreter: Sturm, Christoph
(86) Internationale Anmeldenummer: PCT/EP2007/001520
(87) Internationale Veröffentlichungsnummer: WO 2007/118545

(56) Entgegenhaltungen:
- EP-A1- 0 693 699
- WO-A-93/26070
- WO-A-97/12268
- DE-A1- 3 726 719
- DE-C1- 4 231 181
- DE-U1-202005 009 932

## Beschreibung

Die Erfindung betrifft eine Vorrichtung zur Abfangung von Lichtwellenleiterkabeln nach dem Oberbegriff des Patentanspruchs 1.

Beim Aufbau von Lichtwellenleiterkabelnetzen ist es erforderlich, sogenannte Verbindungsstellen bzw. Abzweigstellen für Lichtwellenleiterkabel vorzusehen, wobei an den Verbindungsstellen bzw. Abzweigstellen Spleiße zwischen in den Lichtwellenleiterkabeln geführten Lichtwellenleitern ausgebildet werden. Zum Schutz der Spleißverbindungen an den Verbindungsstellen bzw. Abzweigstellen werden die Spleißverbindungen in sogenannten Kabelmuffen abgelegt, wobei die Lichtwellenleiterkabel über einen Dichtkörper einer Kabelmuffe in einen Innenraum der Kabelmuffe eingeführt werden.

Die Lichtwellenleiterkabel werden außerhalb bzw. innerhalb der Kabelmuffe gegenüber einer Zugbeanspruchung sowie gegebenenfalls auch Torsionsbeanspruchung und Biegebeanspruchung abgefangen, wobei hierzu spezielle Abfangvorrichtungen dienen. Die hier vorliegende Erfindung betrifft eine Vorrichtung zur Abfangung von Lichtwellenleiterkabeln im Bereich eines Dichtkörpers einer Kabelmuffe, nämlich innerhalb eines von der Kabelmuffe begrenzten Innenraums.

Eine Vorrichtung zur Abfangung von Lichtwellenleiterkabeln nach dem Oberbegriff des Patentanspruchs ist aus der WO 97/12268 A1 bekannt.

Der hier vorliegenden Erfindung liegt das Problem zu Grunde, eine neuartige Vorrichtung zur Abfangung von Lichtwellenleiterkabeln zu schaffen.

Dieses Problem wird durch eine Vorrichtung gemäß Patentanspruch 1 gelöst.

An der erfindungsgemäßen Vorrichtung können mehrere Lichtwellenleiterkabel gegenüber einer Zugbeanspruchung, Torsionsbeanspruchung und Beigebeanspruchung individuell abgefangen werden, wobei die Vorrichtung an unterschiedliche Kabeldurchmesser der abzufangenden Lichtwellenleiterkabel angepasst werden kann. Zur Anpassung an die Kabeldurchmesser der Lichtwellenleiterkabel sind einerseits die Schieberteile gegenüber dem Montageteil verstellbar, um so die Schieberteile gegenüber einer Mantelfläche der abzufangenden Lichtwellenleiterkabel auszurichten, andererseits sind die Führungsteile gegenüber den Schieberteilen verstellbar, um so die Führungsteile gegenüber den Zentralelementen der abzufangenden Lichtwellenleiterkabel auszurichten.

Bevorzugte Weiterbildungen der Erfindung ergeben sich aus den Unteransprüchen und der nachfolgenden Beschreibung.

Ein Ausführungsbeispiel der Erfindung wird, ohne hierauf beschränkt zu sein, anhand der Zeichnung näher erläutert. In der Zeichnung zeigt:
- Fig. 1:: eine perspektivische Ansicht einer erfindungsgemäßen Vorrichtung zur Abfangung von Lichtwellenleiterkabeln nach einem ersten Ausführungsbeispiel der Erfindung zusammen mit sechs an der Vorrichtung abgefangenen Lichtwellenleiterkabeln;
- Fig. 2:: die erfindungsgemäße Vorrichtung zur Abfangung von Lichtwellenleiterkabeln der Fig. 1 in Draufsicht;
- Fig. 3:: einen Querschnitt durch die erfindungsgemäße Vorrichtung zur Abfangung von Lichtwellenleiterkabeln der Fig. 1 und 2 entlang der Schnittlinie III-III in Fig. 2;
- Fig. 4:: einen Ausschnitt aus einer erfindungsgemäßen Vorrichtung zur Abfangung von Lichtwellenleiterkabeln nach einem zweiten Ausführungsbeispiel der Efindung in einer Ansicht analog zu Fig. 1.

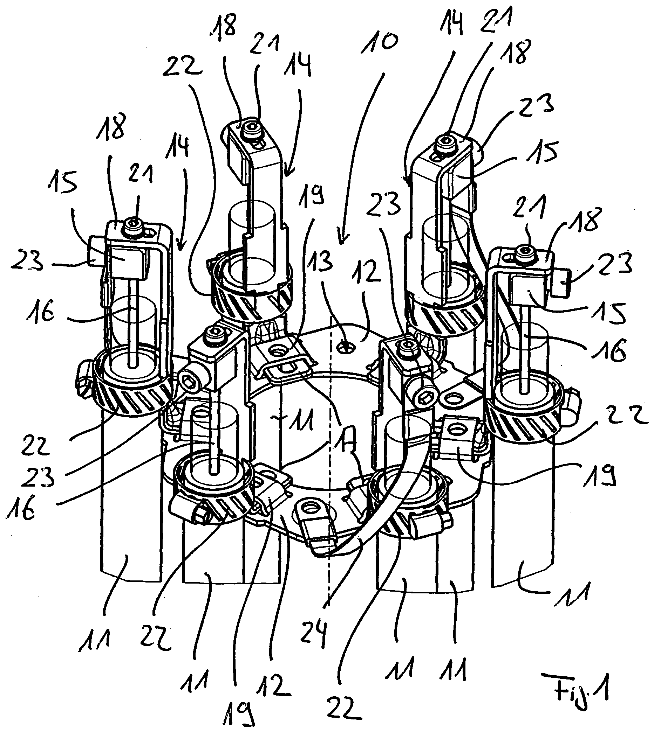

Nachfolgend wird die Erfindung unter Bezugnahme auf Fig. 1 bis 3 in größerem Detail beschrieben.

Fig. 1 bis 3 zeigen unterschiedliche Ansichten einer erfindungsgemäßen Vorrichtung 10 zur Abfangung von Lichtwellenleiterkabeln nach einem ersten Ausführungsbeispiel der Erfindung mit insgesamt sechs an der Vorrichtung 10 abgefangenen Lichtwellenleiterkabeln 11. Die erfindungsgemäße Vorrichtung 10 dient dabei der Abfangung der Lichtwellenleiterkabel 11 in einem Innenraum einer nicht-dargestellten Kabelmuffe, wobei die Lichtwellenleiterkabel 11 über Einführungsöffnungen eines Dichtkörpers der Kabelmuffe in den Innenraum derselben eingeführt werden.

Die erfindungsgemäße Vorrichtung 10 verfügt über ein Montageteil 12, wobei das Montageteil 12 am nicht-dargestellten Dichtkörper einer Kabelmuffe befestigbar ist. Das Montageteil 12 ist im gezeigten Ausführungsbeispiel ringförmig ausgebildet und über nicht-dargestellte Befestigungsschrauben, die sich durch in das Montageteil 12 eingebrachte Bohrungen 13 erstrecken, unverschiebbar am Dichtkörper der Kabelmuffe fixierbar.

Neben dem ringförmigen Montageteil 12 verfügt die erfindungsgemäße Vorrichtung 10 über mehrere am Montageteil 12 angreifende Schieberteile 14. Im gezeigten Ausführungsbeispiel greifen am ringförmigen Montageteil 12 insgesamt sechs Schieberteile 14 an, wobei jedes Schieberteil 14 der individuellen Abfangung eines einzigen Lichtwellenleiterkabels 11 dient. Jedes der Schieberteile 14 ist zur Anpassung desselben an einen Kabeldurchmesser des jeweils abzufangenen Lichtwellenleiterkabels 11 innerhalb vorgegebener Grenzen translatorisch relativ zum Montageteil 12 verstellbar, nämlich in Radialrichtung des Montageteils 12 bzw. eines Dichtkörpers einer Kabelmuffe, an welchem das Montageteil 12 befestigt ist.

Neben dem Montageteil 12 und den Schieberteilen 14 verfügt die erfindungsgemäße Vorrichtung 10 über Führungsteile 15, wobei im gezeigten Ausführungsbeispiel jedem Schieberteil 14 ein Führungsteil 15 zugeordnet ist. Jedes Führungsteil 15 dient der individuellen Abfangung eines Zentralelements 16 des am entsprechenden Schieberteil 14 abzufangenden Lichtwellenleiterkabels 11. Zur Anpassung der Führungsteile 15 an unterschiedliche Kabeldurchmesser der an den entsprechenden Schieberteilen 14 abzufangenden Lichtwellenleiterkabel 11 ist jedes Führungsteil 15 relativ zum entsprechenden Schieberteil 14 innerhalb vorgegebener Grenzen translatorisch verstellbar, und zwar in Radialrichtung des Montageteils 12 bzw. eines nicht-dargestellten Dichtkörpers einer Kabelmuffe, an welchem das Montageteil 12 befestigt ist.

Bei der erfindungsgemäßen Vorrichtung 10 zur Abfangung von Lichtwellenleiterkabeln 11 können demnach einerseits die Schieberteile 14 relativ zum Montageteil 12 verstellt werden, um so dieselben an einer äußeren Mantelfläche der abzufangenden Lichtwellenleiterkabel 11 zur Anlage zu bringen und die Lichtwellenleiterkabel 11 an den Schieberteilen 14 abzufangen. Andererseits können die Führungsteile 15 relativ zu den Schieberteilen 14 verstellt werden, um dieselben exakt zu abzufangenden Zentralelementen 16 der Lichtwellenleiterkabel 11 auszurichten, so dass die Zentralelemente 16 zur Abfangung nicht verbogen bzw. abgeknickt werden müssen.

Jedes Zentralelement 16 eines Lichtwellenleiterkabels 11 kann demnach an der erfindungsgemäßen Vorrichtung 10 mittig zentriert abgefangen werden.

Mit Hilfe der erfindungsgemäßen Vorrichtung 10 können demnach auf die Lichtwellenleiterkabel 11 sowie deren Zentralelemente 16 einwirkende Zugkräfte, Schubkräfte, Biegekräfte und Torsionskräfte reduziert bzw. kompensiert werden.

Jedes Schieberteil 14 der erfindungsgemäßen Vorrichtung 10 verfügt über eine Grundplatte, die an zwei gegenüberliegenden Enden in unterschiedliche Richtungen abgewinkelte Endabschnitte 17 und 18 aufweist. Über erste Endabschnitte 17 greifen die Schieberteile 14 am Montageteil 12 an, nämlich an U-förmigen Ausstellungen 19 des Montageteils 12. Die ersten Endabschnitte 17 der Schieberteile 14 sind in die U-förmigen Ausstellungen 19 des Montageteils 12 eingeführt und in denselben verschiebbar gelagert. Über diese Verschiebung können die Schieberteile 14 an den Kabeldurchmesser eines an denselben abzufangenden Lichtwellenleiterkabels 11 angepasst werden, und zwar derart, dass ein Mittelabschnitt 20 der Schieberteile 14 an einem Kabelmantel der abzufangenden Lichtwellenleiterkabel 11 zur Anlage gebracht werden kann.

Die Relativposition eines Schieberteils 14 relativ zum Montageteil 12 kann über eine nicht-dargestellte Feststellschraube fixiert werden, die sich durch eine Bohrung in der U-förmigen Ausstellung 19 und durch ein Langloch innerhalb des ersten Endabschnitts 17 des Schieberteils 14 erstreckt. Bei gelöster Feststellschraube kann das Schieberteil 14 relativ zur U-förmigen Ausstellung 19 des Mittelteils 14 translatorisch verschoben werden, wobei sich dann die Position der Feststellschraube relativ zum Langloch der ersten Endabschnitts 17 des Schieberteils 14 verändert. Bei angezogener Feststellschraube fixiert dieselbe die Relativposition des Schieberteils 14 zum Montageteil 12.

An dem relativ zum ersten Endabschnitt 17 der Schieberteile 14 in die entgegengesetzte Richtung gebogenen zweiten Endabschnitt 18 derselben greift im Bereich jedes Schieberteils 14 ein Führungsteil 15 an.

Das Führungsteil 15 ist am zweiten Endabschnitt 18 des entsprechenden Schieberteils 14 in translatorischer Richtung verschiebbar gelagert, und zwar derart, dass eine am Führungsteil 15 angreifende Feststellschraube 21 in einem Langloch des zweiten Endabschnitts 18 des entsprechenden Schieberteils 14 geführt ist, wobei bei gelöster Feststellschraube 21 dieselbe und damit das entsprechende Führungsteil 21 relativ zum Schieberteil 14 translatorisch verschoben werden kann.

Zur Abfangung der Lichtwellenleiterkabel 11 werden dieselben im gezeigten Ausführungsbeispiel über eine Kabelschelle 22 am Mittelabschnitt 20 eines Schieberteils 14 befestigt. Solche Kabelschellen werden auch als Schlauchschellen bezeichnet. Anstelle von Kabelschellen können auch Kabelbinder zur Befestigung und damit Abfangung der Lichtwellenleiter 11 an den Schieberteilen 14 verwendet werden.

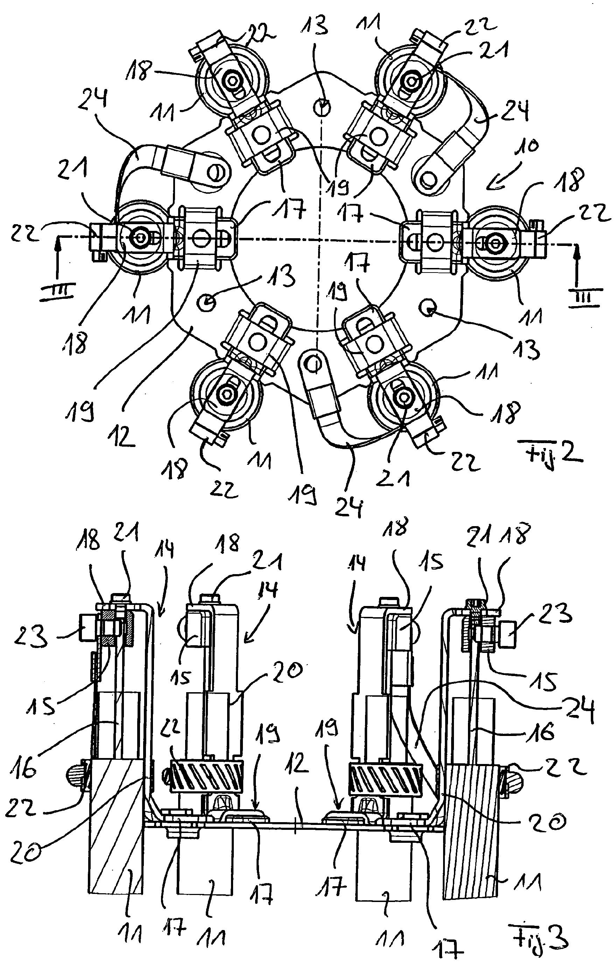

Die Führungsteile 15 verfügen, wie am besten Fig. 3 entnommen werden kann, über eine Ausnehmung, in welche ein Zentralelement 16 eines Lichtwellenleiterkabels 11 eingeführt werden kann, um dasselbe abzufangen. Über die bereits oben beschriebene translatorische Verstellbarkeit des Führungsteils 15 relativ zum zweiten Endabschnitt 18 des Schieberteils 14 kann diese Bohrung des Führungsteils 15 exakt mittig zum abzufangenden Zentralelement 16 des Lichtwellenleiterkabels ausgerichtet werden, so dass das Zentralelement 16 ohne jegliche Abknickung bzw. Auslenkung geradlinig in die Bohrung des jeweiligen Führungsteils eingeführt werden kann. Eine Fixierschraube 23 dient dabei der Fixierung des Zentralelements 16 in der Bohrung des Führungsteils 15.

Jedes Zentralelement 16 eines Lichtwellenleiterkabels 11 kann individuell geerdet werden. Hierzu dient jeweils ein Erdungsband 24, welches mit einem ersten Ende am Montageteil 12 der Vorrichtung 10 und mit einem zweiten Ende am Führungsteil 15, in welchem das jeweilige Zentralelement 16 abgefangen ist, angreift. Im gezeigten Ausführungsbeispiel sind die Zentralelemente 16 von drei Lichtwellenleiterkabeln 11 über jeweils ein Erdungsband 24 individuell geerdet.

Bei der erfindungsgemäßen Vorrichtung zur Abfangung von Lichtwellenleiterkabeln können demnach mehrere Lichtwellenleiterkabel sowie deren Zentralelemente individuell abgefangen werden, wobei einerseits die Schieberteile 14, die jeweils der individuellen Abfangung eines Lichtwellenleiterkabels 11 dienen, relativ zum Montageteil 12 individuell translatorisch verschiebbar sind, und wobei andererseits die Führungsteile 15, die der Abfangung der Zentralelemente 16 der jeweiligen Lichtwellenleiterkabel 11 dienen, relativ zum jeweiligen Schieberteil 14 translatorisch verstellbar sind, um dieselben mittig zum abzufangenden Zentralelement auszurichten. Hierdurch kann gewährleistet werden, dass ein Zentralelement 16 eines Lichtwellenleiterkabels 11 zur Abfangung nicht ausgeknickt werden muss. Vielmehr kann die erfindungsgemäße Vorrichtung stufenlos an unterschiedliche Durchmesser der Lichtwellenleiterkabel und dadurch bedingte unterschiedliche Positionen der Zentralelemente 16 angepasst werden.

Die Schieberteile 14 der erfindungsgemäßen Vorrichtung 10 sind über den Umfang des ringförmigen Montageteils 12 in etwa gleichverteilt angeordnet. Die Schieberteile 14 bilden zusammen mit dem ringförmigen Montageteil 12 eine sternförmige Abfangvorrichtung, wobei, wie bereits erwähnt, einerseits die Schieberteile 14 relativ zum Montageteil 12 in radialer Richtung stufenlos verstellt werden können, und wobei andererseits die Führungsteile 15 relativ zum jeweiligen Schieberteil 14 und damit zum Montageteil 12 in radialer Richtung stufenlos verstellt werden können. Hierdurch können auf die Lichtwellenleiterkabel 11 sowie deren Zentralelemente 16 wirkende Zugkräfte, Schubkräfte, Biegekräfte und Torsionskräfte kompensiert bzw. abgefangen werden.

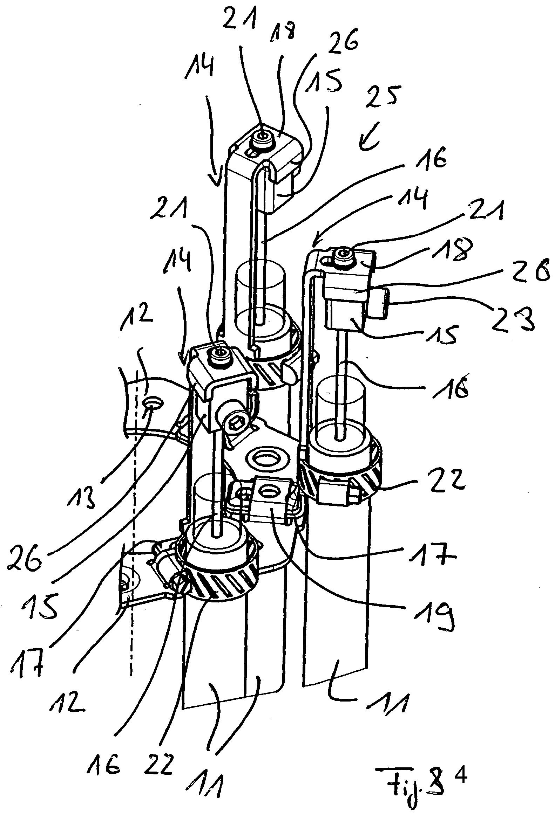

Fig. 4 zeigt einen Ausschnitt aus einer erfindungsgemäßen Vorrichtung 25 zur Abfangung von Lichtwellenleiterkabeln nach einem zweiten Ausführungsbeispiel der Erfindung zusammen mit drei an der Vorrichtung 25 abgefangenen Lichtwellenleiterkabeln 11.

Da das Ausführungsbeispiel der Fig. 4 im wesentlichen dem Ausführungsbeispiel der Fig. 1 bis 3 entspricht, werden zur Vermeidung unnötiger Widerholungen für gleiche Baugruppen gleiche Bezugsziffern verwendet und es wird nachfolgend nur auf die Details eingegangen, durch die sich das Ausführungsbeispiel der Fig. 4 vom Ausführungsbeispiel der Fig. 1 bis 3 unterscheidet.

Das Ausführungsbeispiel der Fig. 4 unterscheidet sich vom Ausführungsbeispiel der Fig. 1 bis 3 lediglich dadurch, dass die Schieberteile 14 im Bereich der zweiten Endabschnitte 18 nach unten abgewinkelte Abschnitte bzw. Laschen 26 aufweisen, die der Verdrehsicherung der Führungsteile 15 am jeweiligen zweiten Endabschnitt 18 eines Schieberteils 14 dienen. Hierdurch kann die Montagefreundlichkeit erhöht werden.

### Bezugszeichenliste

- 10: Vorrichtung
- 11: Lichtwellenleiterkabel
- 12: Montageteil
- 13: Bohrung
- 14: Schieberteil
- 15: Führungsteil
- 16: Zentralelement
- 17: Endabschnitt
- 18: Endabschnitt
- 19: Ausstellung
- 20: Mittelabschnitt
- 21: Feststellschraube
- 22: Kabelschelle
- 23: Fixierschraube
- 24: Erdungsband
- 25: Vorrichtung
- 26: Lasche

## Patentansprüche

1. Vorrichtung zur Abfangung von Lichtwellenleiterkabeln im Bereich eines Dichtkörpers einer Kabelmuffe, nämlich innerhalb eines von der Kabelmuffe begrenzten Innenraums derselben, mit einem Montageteil (12), wobei das Montageteil (12) am Dichtkörper der Kabelmuffe befestigbar ist, mit mehreren am Montageteil (12) angreifenden Schieberteilen (14), wobei jedes Schieberteil (14) der individuellen Abfangung eines einzigen Lichtwellenleiterkabels dient und zur Anpassung desselben an einen Kabeldurchmesser des jeweils abzufangenden Lichtwellenleiterkabels in seiner Position relativ zum Montageteil (12) innerhalb vorgegebener Grenzen translatorisch verstellbar ist, und mit an den Schieberteilen (14) angreifenden Führungsteilen (15), wobei jedes Führungsteil (15) der individuellen Abfangung eines Zentralelements des am entsprechenden Schieberteil (14) abzufangenden Lichtwellenleiterkabels dient, **dadurch gekennzeichnet, dass** jedes Schieberteil eine Grundplatte aufweist, die an zwei gegenüberliegenden Enden in unterschiedliche Richtungen abgewinkelte Endabschnitte aufweist, wobei ein Schieberteil über einen ersten Endabschnitt (17) am Montageteil (12) angreift und über den ersten Endabschnitt relativ zum Montageteil in Radialrichtung des Dichtkörpers verstellbar ist, und wobei am zweiten Endabschnitt (18) des Schieberteils (14) ein Führungsteil (15) angreift, das an dem zweiten Endabschnitt zur mittigen Ausrichtung des Führungsteils an das Zentralelement des jeweils abzufangenden Lichtwellenleiterkabels in seiner Position relativ zum Schieberteil (14) in Radialrichtung des Dichtkörpers innerhalb vorgegebener Grenzen translatorisch verstellbar ist.

2. Vorrichtung nach Anspruch 1, **dadurch gekennzeichnet, dass** das Montageteil (12) ringförmig ausgebildet und am Dichtkörper der Kabelmuffe unverschiebbar befestigbar ist.

3. Vorrichtung nach Anspruch 1 oder 2, **dadurch gekennzeichnet, dass** an einem sich zwischen den beiden Endabschnitten (17, 18) des Schieberteils (14) erstreckenden Mittelabschnitt (20) des Schieberteils das an dem Schieberteil (14) abzufangende Lichtwellenleiterkabel vorzugsweise über eine Kabelschelle oder einen Kabelbinder befestigbar ist.

4. Vorrichtung nach einem oder mehreren der Ansprüche 1 bis 3, **dadurch gekennzeichnet, dass** die Relativposition eines Schieberteils (14) zum Montageteil (12) über eine an dem ersten Endabschnitt (17) des Schieberteils (14) angreifende Feststellschraube fixierbar ist.

5. Vorrichtung nach einem oder mehreren der Ansprüche 1 bis 4, **dadurch gekennzeichnet, dass** die Relativposition eines Führungsteils (15) zum entsprechenden Schieberteil (14) über eine an dem zweiten Endabschnitt (18) des Schieberteils angreifende Feststellschraube (21) fixierbar ist.

6. Vorrichtung nach einem oder mehreren der Ansprüche 1 bis 5, **dadurch gekennzeichnet, dass** das Zentralelement jedes Lichtwellenleiterkabels über jeweils ein Erdungsband (24), welches einerseits am Montageteil (12) und andererseits am Führungsteil (15), in welchem das jeweilige Zentralelement abgefangen ist, angreift, individuell geerdet werden kann.

## Claims

1. Apparatus for restraining fiberoptic cables in the region of a sealing body of a cable sleeve, namely within an interior thereof which is delimited by the cable sleeve, with a fitting part (12), the fitting part (12) being capable of being fastened on the sealing body of the cable sleeve, with a plurality of slide parts (14) acting on the fitting part (12), each slide part (14) being used for individually restraining a single fiberoptic cable and being capable of being moved translatorially in terms of its position relative to the fitting part (12) within predetermined limits for the purpose of matching said slide part (14) to a cable diameter of the respective fiberoptic cable to be restrained, and with guide parts (15) acting on the slide parts (14), each guide part (15) being used for individually restraining a central element of the fiberoptic cable to be restrained on the corresponding slide part (14), **characterized in that** each slide part has a base plate, which has end sections which are bent back in different directions at two opposite ends, a slide part acting on the fitting part (12) via a first end section (17) and being capable of being moved relative to the fitting part in the radial direction of the sealing body via the first end section, and a guide part (15) acting on the second end section (18) of the slide part (14), which guide part is capable of being moved on the second end section translatorially in terms of its position relative to the slide part (14) in the radial direction of the sealing body within predetermined limits for the purpose of aligning the guide part centrally with respect to the central element of the respective fiberoptic cable to be restrained.

2. Apparatus according to Claim 1, **characterized in that** the fitting part (12) is in the form of a ring and is capable of being fastened non-displaceably on the sealing body of the cable sleeve.

3. Apparatus according to Claim 1 or 2, **characterized in that** the fiberoptic cable to be restrained on the slide part (14) is preferably capable of being fastened via a cable clamp or a cable tie on a central section (20) of the slide part which extends between the two end sections (17, 18) of the slide part (14).

4. Apparatus according to one or more of Claims 1 to 3, **characterized in that** the relative position of a slide part (14) with respect to the fitting part (12) is capable of being fixed by means of a locking screw which acts on the first end section (17) of the slide part (14).

5. Apparatus according to one of more of Claims 1 to 4, **characterized in that** the relative position of a guide part (15) with respect to the corresponding slide part (14) can be fixed by means of a locking screw (21) which acts on the second end section (18) of the slide part.

6. Apparatus according to one or more of Claims 1 to 5, **characterized in that** the central element of each fiberoptic cable can be individually grounded via in each case one grounding strip (24), which acts firstly on the fitting part (12) and secondly on the guide part (15) in which the respective central element is restrained.

## Revendications

1. Dispositif destiné à serrer des câbles optiques dans la région d'un corps d'étanchéité d'un manchon de câble, notamment dans un espace interne délimité par le manchon de câble, comportant une partie de montage (12), dans lequel la partie de montage (12) peut être fixée au corps d'étanchéité du manchon de câble, comportant plusieurs éléments coulissants (14) s'engageant sur la partie de montage (12), dans lequel chaque partie coulissante (14) est destinée au serrage individuel d'un seul câble optique et peut être déplacée en translation à sa position par rapport à la partie de montage (12) dans des limites prédéterminées pour son adaptation à un diamètre de câble du câble optique respectif devant être serré, et comportant des parties de guidage (15) s'engageant sur les parties coulissantes (14), dans lequel chaque partie de guidage (15) est utilisée pour le serrage individuel d'un élément central du câble optique devant être serré sur la partie coulissante (14) correspondante, **caractérisé en ce que** chaque partie coulissante comporte une plaque de base qui présente à deux extrémités opposées des sections d'extrémité coudées dans des directions différentes, dans lequel une partie coulissante s'engage par l'intermédiaire d'une première section d'extrémité (17) sur la partie de montage (12) et peut être déplacée par l'intermédiaire de la première section d'extrémité par rapport à la partie de montage dans la direction radiale du corps d'étanchéité, et dans lequel une partie de guidage (15) s'engage sur une deuxième section d'extrémité (18) de la partie coulissante (14), laquelle partie de guidage peut être déplacée en translation sur la deuxième section d'extrémité afin d'orienter de manière centrale la partie de guidage sur l'élément central du câble optique devant être serré à sa position par rapport à la partie coulissante (14) dans la direction radiale du corps d'étanchéité dans des limites prédéterminées.

2. Dispositif selon la revendication 1, **caractérisé en ce que** la partie de montage (12) est réalisée de manière à présenter une forme annulaire et **en ce qu'**elle peut être fixée de manière non coulissante au corps d'étanchéité du manchon de câble.

3. Dispositif selon la revendication 1 ou 2, **caractérisé en ce que** le câble optique devant être serré sur la partie coulissante (14) peut de préférence être fixé par l'intermédiaire d'un serre-câble ou d'un collecteur de câbles à une section centrale (20) s'étendant entre les deux sections d'extrémité (17, 18) de la partie coulissante (14).

4. Dispositif selon une ou plusieurs des revendications 1 à 3, **caractérisé en ce que** la position relative d'une partie coulissante (14) par rapport à la partie de montage (12) peut être fixée par l'intermédiaire d'une vis de calage s'engageant sur la première section d'extrémité (17) de la partie coulissante (14).

5. Dispositif selon l'une ou plusieurs des revendications 1 à 4, **caractérisé en ce que** la position relative d'une partie de guidage (15) peut être fixée par rapport à la partie coulissante (14) correspondante par l'intermédiaire d'une vis de calage (21) s'engageant sur la deuxième section d'extrémité (18) de la partie coulissante.

6. Dispositif selon l'une ou plusieurs des revendications 1 a 5, **caractérisé en ce que** l'élément central de chaque câble optique peut être mis à la terre individuellement par l'intermédiaire d'une bande de mise à la terre (24) respective qui s'engage d'une part sur la partie de montage (12) et d'autre part sur la partie de guidage (15) dans laquelle est serré l'élément central respectif.
